(19) **Europäisches Patentamt / European Patent Office / Office européen des brevets**

(11) **EP 2 420 393 B1**

(12) **EUROPEAN PATENT SPECIFICATION**

(45) Date of publication and mention
of the grant of the patent:
**29.01.2014 Bulletin 2014/05**

(21) Application number: **10764255.5**

(22) Date of filing: **13.04.2010**

(51) Int Cl.:
*B60C 5/14* (2006.01)    *C08L 23/08* (2006.01)
*C08L 75/04* (2006.01)    *C08L 53/02* (2006.01)
*C08L 23/12* (2006.01)    *C08L 23/28* (2006.01)

(86) International application number:
**PCT/JP2010/002675**

(87) International publication number:
**WO 2010/119668 (21.10.2010 Gazette 2010/42)**

(54) **PNEUMATIC TIRE**

LUFTREIFEN

PNEUMATIQUE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **13.04.2009 JP 2009097474**

(43) Date of publication of application:
**22.02.2012 Bulletin 2012/08**

(73) Proprietor: **Bridgestone Corporation**
**Tokyo 104-8340 (JP)**

(72) Inventors:
• **TAKAHASHI, Yuwa**
**Kodaira-shi**
**Tokyo 187-8531 (JP)**

• **OZAWA, Yoichi**
**Kodaira-shi**
**Tokyo 187-8531 (JP)**

(74) Representative: **Waldren, Robin Michael et al**
**Marks & Clerk LLP**
**90 Long Acre**
**London**
**WC2E 9RA (GB)**

(56) References cited:
**JP-A- 8 132 553**    **JP-A- 2002 283 808**
**JP-A- 2008 024 228**

**Description**

TECHNICAL FIELD

The present invention relates to a pneumatic tire having an inner liner on an inner face thereof, and more specifically, to the pneumatic tire that eliminate the necessity of application of a mold release agent to the inner face at the time of manufacture by use of a bladder.

BACKGROUND ART

In order to maintain a steady tire pressure preventing air leak, a layer of the inner liner is conventionally disposed on the inner face of the pneumatic tire. The layer of the inner liner is primarily composed of butyl-based rubber having low gas permeability, such as butyl rubber and halogenated butyl rubber. However, increase in an amount of the butyl-based rubber degrades strength of unvulcanized rubber, which is likely to cause rubber cutting and boring of sheets. Especially if the inner liner has a thin gauge, it causes a problem to easily expose codes inside the tires in manufacturing thereof. Accordingly, the amount of the butyl-based rubber contained in the inner liner is automatically limited. When a rubber composition composed primarily of butyl-based rubber is used for the inner liner, it has been necessary to make a thickness of the inner liner about 1mm in order to retain gas barrier property as well as strength of the unvulcanized rubber. Therefore, a weight of the inner liner accounts for about 5% of the tire, which has been an obstacle to reduction in the weight of the tire for the purpose of improvement in fuel consumption of vehicles.

In order to respond to a recent public request for energy saving, there have been suggested methods to make the inner liner having a thin gage for the purpose of reduction in the weights of the tire for the vehicles. For examples, there is suggested a method to use a nylon film layer or a vinylidene chloride layer for the inner liner, in place of butyl-based rubber conventionally used (for example, see Patent Document 1 and Patent Document 2). In addition, it is also suggested to use a film composed of a blend of thermoplastic resin, such as polyamide resin, polyester resin and the like, and elastomer for the inner liner (for example, see Patent Document 3).

The methods to use the above films may contribute to reduction in the weights of the tire, to some extent. However, since the matrix of the film is a crystalline resin material, the above methods have disadvantages that, in addition to complication of tire manufacturing process, anti-crack property and flex fatigue resistance especially at a low temperature, 5 degrees Celsius or below, are inferior to those of the layer made of the rubber composition having usual butyl-based rubber blended therein.

An ethylene-vinyl alcohol copolymer (hereinafter, abbreviated to EVOH as necessary) is known for its excellent gas barrier property. Since a gas permeability rate of the EVOH is equal to or less than 1% of that of the rubber composition having butyl-based rubber blended therein used for the inner liner, EVOH, even only 50μm or less in thickness, achieves a great improvement in retaining inner pressure of the tire while reducing the weight of the tire.. Accordingly, it is considered that use of the EVOH as the inner liner of the tire is effective for the purpose of improvement in the gas permeability of the pneumatic tire. As such, there is known pneumatic tire having the inner liner made of the EVOH, for example (for example, see Patent Document 4).

However, despite the great effect in improvement in retaining the inner pressure of the tire, the inner liner made of usual EVOH, with a greater elasticity in comparison to rubbers normally used for the tire, have been causing a fracture and a crack as bent and deformed. Therefore, when the inner liner made of the EVOH is used, the retention of the inner pressure of the tire before used is dramatically improved, although used tire having been bent and deformed in their rolling motion have degraded retention of the inner pressure at times.

In order to solve such a problem, there is disclosed a method to use, for the inner liner, a resin composition composed of an ethylene-vinyl alcohol copolymer 60-99 wt %, containing ethylene 20-70 mol % and having a saponification degree of 85% or higher, and hydrophobic plasticizer 1-40 wt %, for example (for example, see Patent Document 5). However, flex resistance of such inner liner is not always satisfactory.

In general, vulcanizing and molding of the pneumatic tire is carried out by setting an unvulcanized tire in mold and inflating the bladder inside the unvulcanized tire so as to impress the unvulcanized tire against inner face of the mold. When the above resin film is used for the inner liner, a mold release agent is usually applied to the inner face of the pneumatic tire before the vulcanizing and molding, in order to prevent air accumulation and film damage caused as the inner face of the tire cannot slip on the bladder.

DOCUMENTS OF PRIOR ART

PATENT DOCUMENTS

_

Patent Document 1: Japanese Patent Application Laid-Open No. 1995-40702
Patent Document 2: Japanese Patent Application Laid-Open No.1995-81306
Patent Document 3: Japanese Patent Application Laid-Open No.1998-26407
Patent Document 4: Japanese Patent Application Laid-Open No. 1994-40207
Patent Document 5: Japanese Patent Application Laid-Open No.2002-52904
Preference is also made to JP 8-132553 and JP 2008-024228.

SUMMARY OF INVENTION

PROBLEMS TO BE SOLVED BY THE INVENTION

However, application of the mold release agent to the tire in vulcanizing and molding causes problems to complicate a manufacturing process and also to increase manufacturing cost.

Hence, it has been desired to provide the pneumatic tire that prevent air accumulation and film damage even without application of the mold release agent to the inner face of tire in vulcanizing and molding using the bladder.

SOLUTION TO PROBLEM

In order to advantageously solve the above problems, a pneumatic tire according to the present invention is characterized in that having an inner liner including one or more film layers on an inner face of the pneumatic tire, wherein a gelation rate of an innermost layer of the one or more film layers on an innermost side of the pneumatic tire is 10.0-99.0% before vulcanization. According to such a pneumatic tire, the innermost side of the tire, that is, a part (innermost layer) to contact with a bladder in  vulcanizing and molding to impress an unvulcanized tire against the mold by using the bladder has an average gelation rate of 10.0-99.0%. In the vulcanizing and molding, therefore, the bladder smoothly slips on the inner face of the tire without application of a mold release agent to the inner face (film layer) of the tire, thus causing no air accumulation or film damage. In addition, it prevents the bladder from firmly adhering to the inner face of the tire when the tire is removed from the mold after vulcanization. Hence, according to the present invention, it is possible to provide the pneumatic tire which improves productivity by eliminating the necessity of a process to apply the mold release agent to the inner face of the pneumatic tire at the time of manufacture. It is to be noted that the gelation rate is a percentage of insoluble fractions in a good solvent (solution having a difference of an SP value 5 or less from the film layer). The gelation rate may be calculated by, for example, dissolving a certain weight (about a few tens of mg) of the film layer in the good solvent for a day or longer, filtering the solvent and then measuring a dry weight of residues, thus obtaining a ratio (A/B) of the dry weight of the residues (A) and the weight of the film layer (B).

According to the pneumatic tire of the present invention, at least the innermost layer of the one or more film layers includes a crosslinker and is irradiated with electron beam. If the innermost layer is treated with at least one of addition of the crosslinker and irradiation of the electron beam, the film layer is crosslinked, which dramatically reduces fluidity of the film layer and is resistant to cause air accumulation and film fracture in vulcanization of the tire.

According to the pneumatic tire of the present invention, the crosslinker is preferably at least one compound selected from a group composed of a silane compound, a multi-acrylate compound and a multi-methacrylate compound, as such crosslinker accelerates crosslinkmg of the film layer and dramatically reduces fluidity of the film layer, thus even more resistant to air accumulation and film fracture in the tire vulcanization. The multi-acrylate compound represents a compound including a plurality of acrylic acid ester groups, whereas the multi-methacrylate compound represents a compound including a plurality of methacrylic acid ester groups.

According to the pneumatic tire of the present invention, it is preferable that the  one or more film layers is formed of a single or multiple resin film layers and the innermost layer includes urethane elastomer. If the film layer is formed of, for example, the resin film layer formed of a resin film and an auxiliary layer, using the auxiliary layer made of urethane elastomer as the innermost layer of the film layer enables to provide the pneumatic tire having the inner liner with excellent flex resistance.

In addition, according to the pneumatic tire of the present invention, it is preferable that the one or more film layers is a single or multiple resin film layers and the innermost layer includes olefinic elastomer. The innermost layer including the olefinic elastomer facilitates crosslinking reaction by using irradiation of the electronic beam or addition of the crosslinker.

According to the pneumatic tire of the present invention, it is preferable that the one or more film layers is formed of a single or multiple resin film layers and the innermost layer includes diene elastomer. The innermost layer including diene elastomer facilitates crosslinking reaction by using irradiation of the electronic beam or addition of the crosslinker.

According to the pneumatic tire of the present invention, the innermost layer preferably includes 0.1-20 mass % of the crosslinker, as it enhances efficiency of crosslinking and gelation rate with a low irradiation dose. Here, the crosslinker functions as a crosslinking agent in crosslinking and the like of the innermost layer by irradiation of the electronic beam.

Further, in the pneumatic tire according to the present invention, the innermost layer preferably includes trimethylolpropane trimethacrylate (TMPTMA), triallyl isocyanurate (TAIC), isocyanurate trimethacrylate (TMAIC), diethylene glycol diacrylate (DEGDA), trimethylolpropane triacrylate (TMPTA) or neopentyl glycol diacrylate (NPGDA), or a silane crosslinker, as they are particularly suitable for the crosslinker.

In the pneumatic tire according to the present invention, the innermost layer is preferably irradiated with the electron beam at the irradiation dose of 5-600 kGy, as the irradiation dose 5 kGy or over can encourage gelation.

According to the pneumatic tire of the present invention, a total thickness of the one or more film layers is preferably 5-2000$\mu$m, If the total thickness of the film layer is over 2000$\mu$m, it makes the tire too heavy. Meanwhile, if the total thickness of the film layer is less than 5$\mu$m, flexibility and fatigue resistance of the film layer is degraded, which likely to cause fractures and cracks and to expand the cracks, thereby possibly lowering retention of the inner pressure of the tire.

In addition, according to the pneumatic tire of the present invention, the one or more film layers preferably includes a layer composed of an ethylene-vinyl alcohol copolymer. Since the ethylene-vinyl alcohol copolymer has an excellent gas barrier property, the film layer including the layer composed of the ethylene-vinyl alcohol copolymer enables to provide the pneumatic tire having excellent retention of the inner pressure both when the tire is brand new and after used.

Further, according to the pneumatic tire of the present invention, the one or more film layers preferably includes a layer composed of a modified ethylene-vinyl alcohol copolymer. Since the film layer including the layer composed of the modified ethylene-vinyl alcohol copolymer, produced by modifying the ethylene-vinyl alcohol copolymer having the excellent gas barrier property with an epoxy compound or the like, has improved resistance to fractures and cracks as bent, it enables to provide the pneumatic tire having an excellent retention of the inner pressure both when the tire is brand new and after used.

EFFECT OF THE INVENTION

According to the present invention, it is possible to provide the pneumatic tire that prevent air accumulation and film damage even without application of the mold release agent to the inner face of the tire in vulcanizing and molding by use of the bladder.

BRIEF DESCRIPTION OF DRAWINGS

FIG 1 is a diagram illustrating a partial cross-section view of a pneumatic tire according to one example of the present invention; and

FIG 2 shows diagrams illustrating an exemplary method for manufacturing the pneumatic tire according to the present invention: FIG. 2(a) shows setting of an unvulcanized tire in a mold; FIG. 2(b) shows setting of a bladder inside the unvulcanized tire; FIG. 2(c) shows vulcanizing and molding of the tire; and FIG. 2(d) shows removal of a vulcanized tire as a finished product.

DESCRIPTION OF EMBODIMENT

The following is a detailed description of a pneumatic tire according to the present invention. The pneumatic tire according to the present invention has an inner liner having one or more film layers on an inner face of the pneumatic tire. Among the one or more film layers, a gelation rate of an innermost layer on an innermost side of the pneumatic tire is 10.0-99.0%, preferably 15.0-95.0%, more preferably 18.0-90.0%, before vulcanization.

<Film layer>

The film layer may be a film or a sheet made of, for example, polyamide resin, polyvinylidene chloride resin, polyester resin, ethylene-vinyl alcohol copolymer resin or the like, provided that one or more film layers includes a layer composed of an ethylene-vinyl alcohol copolymer. Above all, a resin film having oxygen permeability $3.0 \times 10^{-12}$ cm$^{-3}$ · cm/cm$^2$ · sec · cmHg or less, that is, a film made of ethylene-vinyl alcohol copolymer resin, for example, may be preferably used for the film layer. In terms of reduction in a tire weight, a thickness of the film layer is preferably 0.1-100$\mu$m. The film and sheet may be produced by extrusion molding, for example.

Here, the ethylene-vinyl alcohol copolymer preferably contains ethylene 25-50 mol %. In order to obtain excellent flex resistance and fatigue resistance, a minimum content of ethylene is preferably 30 mol % or more, and more preferably 35 mol % or more. In addition, in order to obtain excellent gas barrier property, a maximum content of ethylene is preferably 48 mol % or less, and more preferably 45 mol % or less. If the content of ethylene is less than 25 mol %, it may possibly deteriorate flexibility, fatigue resistance and fusion formability. Meanwhile, if the content of ethylene is over 50 mol %, it may inhibit desired gas barrier property.

A saponification degree of the ethylene-vinyl alcohol copolymer is preferably 90% or higher, more preferably 95% or higher, further preferably 98% or higher, and most preferably 99% or higher. If the saponification degree is less than 90%, it may cause insufficiency of gas barrier property and thermal stability in forming the film layer.

The ethylene-vinyl alcohol copolymer has a melt flow rate (MFR) of preferably 0.1-30 g/10 min, more preferably 0.3-25 g/10 min, at 190 degrees Celsius and under a load of 2160 g. For the ethylene-vinyl alcohol copolymer with a melting point around or over 190 degrees Celsius, MFR is measured at the temperature of the melting point or higher under the load of 2160g. A preferred ethylene-vinyl alcohol copolymer has a value extrapolated to 190 degrees Celsius by plotting an inverse of an absolute temperature on a horizontal axis and a logarithm of MFR on a vertical axis in a semi-logarithmic graph.

In addition, as ethylene-vinyl alcohol copolymer resin, suitably used may be a modified ethylene-vinyl alcohol copolymer, derived from ethylene-vinyl alcohol copolymer by reaction with an epoxy compound, and a resin composition having a matrix composed of the modified ethylene-vinyl alcohol copolymer having a viscoelastic bodys with Young's modules 500 MPa or less at 23 degrees Celsius dispersed therein. Such resin compound enables improvement in flexibility of the film layer by reducing elastic modules of the film layer, thus reducing likelihood of generation of fractures and cracks when the film layer is bent.

Preferably, the viscoelastic body has a functional group which reacts with a hydroxyl group, such that the viscoelastic body is evenly dispersed in the modified ethylene-vinyl alcohol copolymer. Here, functional groups to react with the hydroxyl group may be a maleic anhydride group, a hydroxyl group, a carboxyl group, an amino group and the like. The viscoelastic body having the functional group to react with the hydroxyl group may be, in particular, a maleic anhydride modified hydrogenated styrene-ethylene-butadiene-styrene block copolymer, a maleic anhydride modified ultralow density polyethylene, and the like. In addition, it is preferred that an average particle diameter of the viscoelastic body is 2μm or smaller. If the average particle diameter of the viscoelastic body exceeds 2μm, it may inhibit sufficient improvement in flex resistance of the film layer, possibly causing degradation of gas barrier property, which may lead to deterioration in retention of an inner pressure of the tire. The average particle diameter of the viscoelastic body in resin compound may be measured by, for example, microscopically observing a section of a frozen sample, which has been cut out with a microtome, by use of a transmission electron microscopy (TEM).

Here, a content rate of the viscoelastic body in the above resin compound is preferably within a range of 10-80 mass %. If it is less than 10 mass %, flexibility cannot be sufficiently improved, whereas the content rate over 80 mass % may degrade gas barrier property.

The modified ethylene-vinyl alcohol copolymer can be obtained by, in particular, reacting the epoxy compound 1-50 parts by mass, preferably 2-40 parts by mass, and more preferably 5-35 parts by mass with the ethylene-vinyl alcohol copolymer 100 parts by mass.

Here, a univalent epoxy compound is preferably used as the epoxy compound to react with the ethylene-vinyl alcohol copolymer. Among univalent epoxy compounds, glycidol and epoxypropane are particularly preferred, in terms of facilitating manufacture of the modified ethylene-vinyl alcohol copolymer, gas barrier property, flex resistance and fatigue resistance.

Although not restrictive, a preferable method to produce the modified ethylene-vinyl alcohol copolymer is to react the ethylene-vinyl alcohol copolymer and epoxy compound with each other in solution. In particular, the modified ethylene-vinyl alcohol copolymer may be produced by adding the epoxy compound to ethylene-vinyl alcohol copolymer solution in the presence of an acid catalyst or an alkali catalyst, preferably in the presence of the acid catalyst, to react the ethylene-vinyl alcohol copolymer and the epoxy compound. Here, reaction solvent may be aprotic polar solvent, such as dimethyl sulfoxide, dimethylformamide, dimethylacetamide, N-methylpyrrolidone and the like. In addition, the acid catalyst may be p-toluenesulfonic acid, methanesulfonic acid, trifluoromethane sulfonate, sulfonic acid, boron trifluoride or the like, whereas the alkali catalyst may be sodium hydroxide, potassium hydroxide, lithium hydroxide, sodium methoxide or the like. Preferably, a quantity of the catalyst is within a range of 0.0001-10 parts by mass to the ethylene-vinyl alcohol copolymer 100 parts by mass.

Alternatively, the modified ethylene-vinyl alcohol copolymer may be produced by dissolving the ethylene-vinyl alcohol copolymer and the epoxy compound in the reaction solvent and then heat-treating the reaction solvent.

In order to obtain excellent flex resistance and fatigue resistance, the modified ethylene-vinyl alcohol copolymer, although not restrictive, has the melt flow rate (MFR) of 0.1-30 g/10 min at 190 degrees Celsius under the load of 2160 g, preferably 0.3-25 g/10 min, and more preferably 0.5-20 g/10 min. For the modified ethylene-vinyl alcohol copolymer having the melting point around or over 190 degrees Celsius, the MFR is measured at the temperature equal to or higher than the melting point under the load of 2160g. The preferred ethylene-vinyl alcohol copolymer has the value extrapolated to 190 degrees Celsius by plotting the inverse of the absolute temperature on the horizontal axis and the logarithm of MFR on the vertical axis in the semi-logarithmic graph.

Oxygen permeability of the film layer composed of the modified ethylene-vinyl alcohol copolymer, at 20 degrees Celsius and 65% RH, is preferably $3.0 \times 10^{-12} cm^3 \cdot cm/cm^2 \cdot sec \cdot cmHg$ or less, more preferably $1.0 \times 10^{-12} cm^3 \cdot cm/cm^2 \cdot sec \cdot cmHg$ or less, and further preferably $5.0 \times 10^{-13} cm^3 \cdot cm/cm^2 \cdot sec \cdot cmHg$ or less. If the oxygen permeability of the film layer, at 20 degrees Celsius and 65% RH, exceeds $3.0 \times 10^{-12} cm^3 \cdot cm/cm^2 \cdot sec \cdot cmHg$, a thickness of the film layer must be increased to enhance the retention of the inner pressure of the tire when the film layer is used as the inner liner, which leads to increase in the tire weight.

The film layer composed of the modified ethylene-vinyl alcohol copolymer may be obtained by forming the modified ethylene-vinyl alcohol copolymer into a film or a sheet through a melting process. In particular, extrusion molding such as, for example, T-die or inflation can be used to manufacture the film layer. A melting temperature in the melting process is preferably 150-270 degrees Celsius, depending on the melting point of the modified ethylene-vinyl alcohol copolymer.

Preferably, the modified ethylene-vinyl alcohol copolymer is crosslinked. If the modified ethylene-vinyl alcohol copolymer is not crosslinked and used for the film layer, a layer composed thereof may be severely deformed in the vulcanization process at the manufacture of the tire and prevents from maintaining the film even, thus possibly deteriorating gas barrier property, flex resistance and fatigue resistance of the film layer.

Although not restrictive, a method to crosslink the modified ethylene-vinyl alcohol copolymer may be irradiation of energy beam. The energy beam may be ionizing radiations such as ultraviolet rays, electron beam, X-ray, $\alpha$-ray or $\gamma$-ray. Above all, electron beam is particularly preferable.

Preferably, the electron beam is irradiated after formation of the modified ethylene-vinyl alcohol copolymer into a formed material, such as a film or a sheet, in the above methods. Here, an irradiation dose of the electron beam for crosslinking is preferably in a range of 5-60 Mrad, more preferably in a range of 10-50 Mrad. The irradiation dose of the electron beam less than 5 Mrad may hardly progress crosslinking, while accelerating deterioration of the formed material over 60 Mrad.

The film layer used for the pneumatic tire according to the present invention may have a structure laminating the above resin film or sheet, or a structure laminating the resin film or sheet and an auxiliary layer.

Here, the auxiliary layer is preferably made of elastomer such as, for example, butyl rubber, diene elastomer, olefinic elastomer or the like.

Diene elastomer may be preferably made of natural rubber or butadiene rubber. In terms of improvement in gas barrier property, however, butyl rubber is preferable, and halogenated butyl rubber is more preferable.

In addition, in order to prevent expansion of cracks in case of generation thereof on the auxiliary layer, it is preferable to use a mixture of butyl rubber and diene elastomer. Thereby, it is possible to maintain high retention of the inner pressure of the pneumatic tire in the case where a minimal crack is generated on the auxiliary layer.

Other preferable elastomer used for the auxiliary layer is thermoplastic urethane elastomer. Thermoplastic urethane elastomer may prevent generation and expansion of cracks on the auxiliary layer and also reduce a weight of the pneumatic tire as it allows for a thin auxiliary layer. Here, if thermoplastic urethane elastomer is used for the auxiliary layer, it is further preferable to have the auxiliary layer made of thermoplastic urethane elastomer as a surface layer (innermost layer) of the film layer. Thereby, it is possible to provide the pneumatic tire having the film layer excellent in flexibility.

More preferably, the auxiliary layer is a multilayer formed of a layer of thermoplastic urethane elastomer and a layer of a mixture of butyl rubber and diene elastomer.

The auxiliary layer has the oxygen permeability, at 20 degrees Celsius and 65% RH, preferably $3.0 \times 10^{-9} cm^3 \cdot cm/cm^2 \cdot sec \cdot cmHg$ or less, and more preferably $1.0 \times 10^{-9} cm^3 \cdot cm/cm^2 \cdot sec \cdot cmHg$ or less. The auxiliary layer also functions as an gas barrier layer when having the oxygen permeability of $3.0 \times 10^{-9} cm^3 \cdot cm/cm^2 \cdot sec \cdot cmHg$ or less at 20 degrees Celsius and 65% RH. Therefore, it fully provides an effect to reinforce gas barrier property of the resin film, thus enabling to maintain high retention of the inner pressure of the tire when the film layer is used for the inner liner. Moreover, it enables to successfully retain the inner pressure in the event of cracks on the resin film. The auxiliary layer with low air permeability is made of butyl rubber or halogenated butyl rubber.

Further, in order to prevent generation and expansion of cracks, a tensile stress of the auxiliary layer in extension at 300% is preferably 10 MPa or less, more preferably 8 MP or less, and further preferably 7 MPa or less. The tensile stress of the auxiliary layer over 10MPa may deteriorate flex resistance and fatigue resistance of the film layer using the auxiliary layer.

Here, the resin film and the auxiliary layer may be adhered to one another by at least one adhesive layer. Having an OH group, the ethylene-vinyl alcohol copolymer used for the resin film may facilitate adhesion to the auxiliary layer. The adhesive used for the adhesive layer may be, for example, chlorinated rubber-isocyanate system adhesive.

Although not restrictive, other methods to produce the above film layer may be, for example: a method to melt and extrude elastomer and adhesive layer that form the auxiliary layer on a molded product (resin film) made of, for example, the film or the sheet of the modified ethylene-vinyl alcohol copolymer; a method to melt and extrude the modified ethylene-vinyl alcohol copolymer and the adhesive layer onto an elastomer base material forming the auxiliary layer; a method to co-extrude the modified ethylene-vinyl alcohol copolymer, the auxiliary layer and, if necessary, the adhesive layer; a method to adhere the molded product obtained from the modified ethylene-vinyl alcohol copolymer and the auxiliary layer with the adhesive layer; and a method, in molding the tire, to adhere the molded product obtained from the modified ethylene-vinyl alcohol copolymer, the auxiliary layer and, if necessary, the adhesive layer on a drum.

When obtaining the film layer by laminating the resin film or sheet and the auxiliary layer, the resin film is preferably composed of the modified ethylene-vinyl alcohol copolymer and have a thickness of preferably 0.1 $\mu$m or more and 100$\mu$m or less, more preferably 1-40$\mu$m, and further preferably 5-30$\mu$m. A total thickness of the film layer is preferably 5-2000$\mu$m, more preferably 100-1000 $\mu$m, and further preferably 300-800 $\mu$m.

If the film layer having the resin film over 100 $\mu$m in thickness is used for the inner liner, it reduces the effect in weight reduction of the tire in comparison to the inner liner using butyl rubber or halogenated butyl rubber for the gas barrier layer and degrades flex resistance and fatigue resistance of the resin film, which likely to lead to fractions and cracks as deformation. Moreover, since cracks generated are likely to expand on such a film layer, the retention of the inner pressure may be reduced when vehicles wearing tires including the film layer run. Meanwhile, if the resin film is less than 0.1 $\mu$m in thickness, it is not possible to retain sufficient gas barrier property.

If the total thickness of the film layer exceeds 2000 $\mu$m, it increases the tire weight. However, if the total thickness is less than 5 $\mu$m, flex resistance and fatigue resistance of the film layer are degraded, which likely to lead to generation of fractures and cracks, and to expand the cracks, thus possibly deteriorating retention of the inner pressure of the tire using such a film layer. In terms of manufacture of the tire, it is difficult to make the auxiliary layer under the tire belt less than 5 $\mu$m in thickness.

The gelation rate of the above film layer may be controlled by changing, for example, the irradiation dose of the electron beam, a quantity or a type (reactivity) of the crosslinker, and a crosslinking condition (whether to contact with the water, heating temperature and the like). The crosslinker may be a compound including a plurality of C=C inside molecules, a compound including a plurality of functional groups for addition/substitution reaction or the like, with a material of the film layer directly, an electron beam crosslinker to crosslink by reacting with carbon radical generated by irradiation of the electron beam, or a crosslinker (silane crosslinker) of a moisture curable type.

In addition, the innermost layer of the above film layer on an innermost side of the pneumatic tire is preferably a layer of an electron beam crosslinked type and, more preferably, includes a crosslinker such as, for example, TMPTMA, TAIC, TMAIC, DEGDA, TMPTA, NPGDA or the like. If the innermost layer includes the crosslinker and irradiated with the electron beam, crosslinking of the film layer is enhanced and fluidity of the film layer is dramatically reduced, thus resistant to air accumulation and film damage in tire vulcanization. Here, an additive amount of the crosslinker may be preferably 0.1-20 mass %, and more preferably 0.2-8 mass %.

In particular, it is the most preferable that the innermost layer is an urethane elastomer layer of the electron beam crosslinked type, as the urethane elastomer is flexible and makes it difficult to break the inner liner. Also, the innermost layer is preferably an ethylene-vinyl alcohol copolymer of the electron beam crosslinked type, as the ethylene-vinyl alcohol copolymer has high gas barrier property and is capable of sufficiently achieving required quality as the inner liner. Moreover, the innermost layer is preferably a polyolefin elastomer layer of the electron beam crosslinked type such as, for example, polypropylene, polyethylene, ethylene-propylene copolymer, ethylene-butylene copolymer, or styrene-ethylene-butylene copolymer. Since the polyolefin elastomer has excellent moisture resistance, it can keep the water out of an inner rubber layer when used for the inner liner. That is, it can improve resistance of the tire, as well as fully functioning as the inner liner in combination with the modified EVOH, for example. The innermost layer may be preferably composed of a diene copolymer such as, for example, butadiene rubber (BR), styrene-butadiene rubber (SBR), isoprene rubber (IR), natural rubber (NR), nitrile rubber (NBR), styrene-butadiene-styrene rubber (SBS), styrene-isoprene-styrene rubber (SIS) or urethane elastomer (TPU), as they can turn into the electron beam crosslinked type as well as having excellent moisture resistance, thus capable of keeping the water out of the inner rubber layer.

In order to prevent deformation of the film layer due to heat in vulcanization of the tire, the innermost layer of the above film layer is preferably crosslinked or half-crosslinked by irradiation of the electron beam. Here, the irradiation dose of the electron beam is, for example, 5-600 kGy, preferably 100-500 kGy, and more preferably 200 kGy or less.

<Inner liner>

The film layer disposed inside the pneumatic tire according to the present invention constitutes the inner liner or a part of it. In particular, the pneumatic tire according to the present invention has the inner liner formed of the film layer and a rubbery elastic layer made of a rubbery elastic body, laminated one another. The inner liner may be disposed such that the film layer is positioned at an inner face of the tire (a surface to contact with the bladder in vulcanizing and molding the tire).

Here, the above rubbery elastic layer preferably includes butyl rubber or halogenated butyl rubber as a rubber constituent. Halogenated butyl rubber may be chlorinated butyl rubber, brominated butyl rubber, or modified rubber thereof. There is halogenated butyl rubber commercially available such as, for example, "Enjay Butyl HT10-66" (registered trademark), chlorinated butyl rubber produced by Enjay Chemical Corporation, and "Bromobutyl 2255" (registered trademark) and "Bromobutyl 2244" (registered trademark), brominated butyl rubber produced by JSR Corporation. Chlorinated or brominated modified rubber may be, for example, "Expro50" (registered trademark) produced by Exxon Mobil Corporation.

In order to improve resistance to air permeability, a content rate of butyl rubber and/or halogenated butyl rubber in the rubber constituent in the rubbery elastic layer is preferably 50 mass % or more, and more preferably 70-100 mass %. Here, the above rubber constituent may be not only butyl rubber or halogenated butyl rubber but also diene rubber or epichlorohydrin rubber. It is possible to use the above rubber constituent singly or in combination of two or more.

The above diene rubber may be, in particular, natural rubber (NR), isoprene rubber (IR), cis-1,4-polybutadiene (BR), syndiotactic-1,2-polybutadiene (1,2BR), styrene-butadiene copolymer rubber (SBR), acrylonitrile-butadiene rubber (NBR), chloroprene rubber (CR) or the like. It is possible to use the above diene rubber singly or in combination of two or more.

For the above rubbery elastic layer, it is possible to optionally dispense, in addition to the above rubber constituents, a compounding agent, usually used in a rubber industry, such as, for example, reinforcing filler, softener, antioxidant, vulcanizing agent, vulcanization accelerator for rubber, antiscorching agent, zinc oxide, stearic acid or the like, as necessary. Those compounding agents are commercially available and can be used suitably.

In the above laminate, the thickness of the film layer is preferably 200 $\mu$m or less, whereas the thickness of the rubbery elastic layer is preferably 200 $\mu$m or more. Here, the thickness of the film layer is preferably about 1 $\mu$m at minimum, more preferably in a range of 10-150 $\mu$m, and further preferably in a range of 20-100 $\mu$m. If the thickness of the film layer exceeds 200 $\mu$m, it degrades flex resistance and fatigue resistance of the laminate when used for the inner liner, which is likely to lead to generation of fractures and cracks as the tire is bent and deformed while rolling. On the other hand, if the thickness of the film layer is less than 1 $\mu$m, it may unable to sufficiently retain gas barrier property. In addition, if the thickness of the rubbery elastic layer is less than 200 $\mu$m, it prevents full effect of reinforcement and increases the likelihood of expansion of fractures and cracks on the film layer, thus making it difficult to prevent disadvantages such as large fractures or cracks.

Here, the film layer and the rubbery elastic layer may be adhered to one another with the adhesive layer composed of adhesive composition. A thickness of the adhesive layer is preferably in a range of 5-100 $\mu$m. Under 5 $\mu$m in thickness, the adhesive layer may cause insufficient adhesion, whereas it reduces benefits from reduction of the tire weight and cost if the thickness is over 100 $\mu$m.

The adhesive composition may be chlorosulfonated polyethylene, butyl rubber, halogenated butyl rubber, diene rubber or the like. Above all, chlorosulfonated polyethylene and butyl rubber and/or halogenated butyl rubber are particularly preferable.

Here, if the adhesive composition includes the rubber constituent such as butyl rubber, halogenated butyl rubber or diene rubber, it is preferable that at least one of poly-p-dinitrosobenzene and 1,4-phenylenedimaleimide as the crosslinker and an assistant crosslinker 0.1 parts by mass or more, a filler such as carbon black, wet silica, aluminum hydroxide, aluminum oxide, magnesium oxide, montmorillonite or mica 2-50 parts by mass and a vulcanization accelerator such as a thiuram vulcanization accelerator or a dithiocarbamate vulcanization accelerator 0.1 parts by mass or more are blended to the rubber constituent 100 parts by mass. In the rubber constituent, it is preferable that chlorosulfonated polyethylene accounts for 10 mass % or more and butyl rubber and/or halogenated butyl rubber accounts for 50 mass % or more.

When disposed on the inner face of the tire, the inner liner is likely to generate fractures and cracks around a side part of the tire, which is severely deformed as bent. Therefore, if the inner liner has a thick auxiliary layer at a part corresponding to a part inside the side part of the tire, it may enhance the retention of the inner pressure of the tire having the inner liner therein while reducing the weight of the inner liner.

<Pneumatic tire>

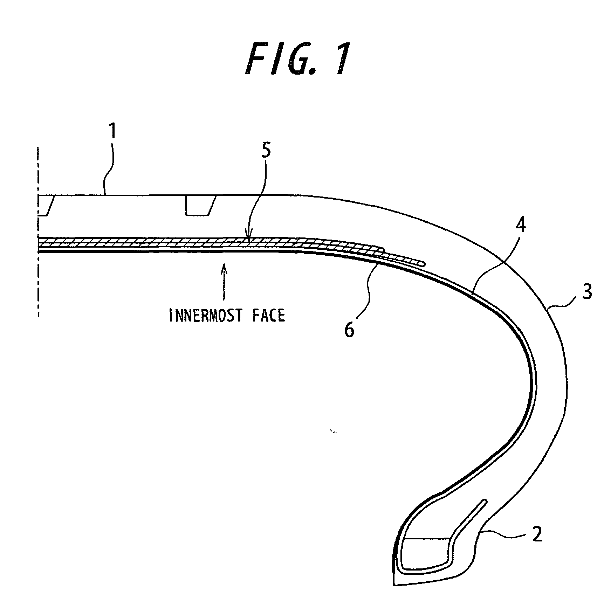

As shown in FIG. 1, for example, the pneumatic tire according to the present invention has a tread 1, a pair of beads 2, a pair of side walls 3 extending between the tread 1 and each bead 2, a carcass 4 in a troidal shape extending between the pair of beads 2 to enforce each of them, a belt 5 formed of two belt layers disposed on an outer side in the tire radius direction of the crown of the carcass 4, and an inner liner 6 disposed on an inner side in the tire radial direction of the carcass 4. The inner face of the pneumatic tire is formed of the above film layers.

Here, in the pneumatic tire, a total thickness of a part of the auxiliary layer, which is in an area from an end of the belt to the bead and having width of at least 30 mm, is preferably at least 0.2 mm thicker than the auxiliary layer under the belt. This is because, since the area from the end of the belt to the bead is most severely bent and thus likely to generate cracks, it is effective to thicken the auxiliary layer in this particular area in order to improve durability of the area of the tire.

Such a pneumatic tire may be manufactured in the following method, for example.

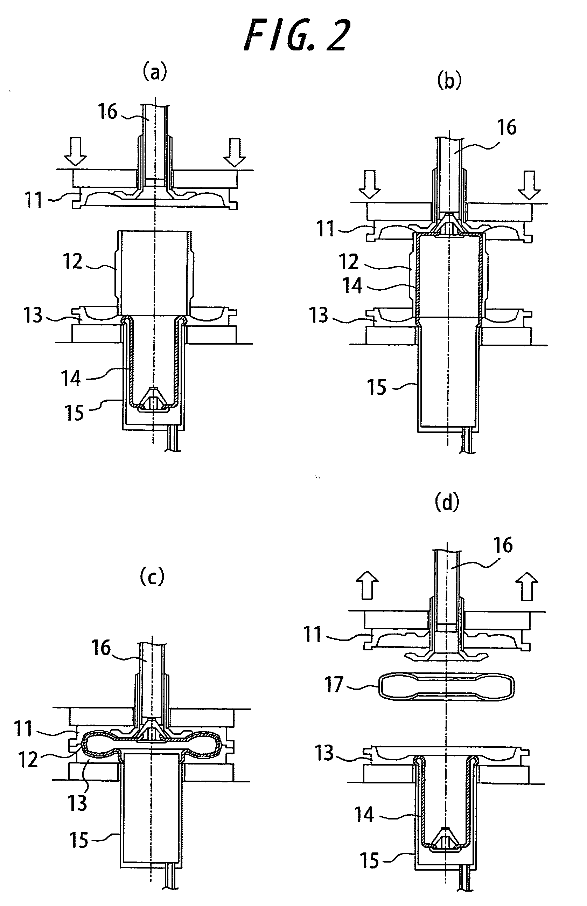

First, an unvulcanized tire 12 having the film layer of the inner liner on the innermost face thereof and produced by a normal method is placed, without application of the mold release agent, between an upper mold 11 and a lower mold 13 such that an axial direction of the tire is vertical (see FIG. 2(a)). Here, a rod 16 is provided on the upper mold 11, whereas a cylinder 15 having a bladder 14 is provided under the lower mold 13. The bladder 14 may be one disclosed in Japanese Patent Application Laid-Open No.2008-179676. In particular, the bladder 14 is a rubber composition composed of, for example, butyl rubber 95 parts by mass, chloroprene rubber 5 parts by mass, carbon black 48 parts by mass, resin 5.5 parts by mass, castor oil 8 parts by mass, and zinc oxide 5 parts by mass, vulcanized and molded in a usual manner.

Next, the upper mold 11 is pushed down and, simultaneously, the bladder 14 is lift up as supplied with heated fluid such as, for example, steam from lower part of the cylinder 15, thereby the bladder 14 is disposed inside the unvulcanized tire 12 (inside of the film layer) (see FIG. 2(b)).

Then, the upper mold 11 is pressed further down by the rod 16 to firmly contact with the lower mold 13. The unvulcanized tire 12 is pressed against the molds by the bladder 14 inflated by supply of the steam (see FIG. 2(c)). At this time, since the above film layer is positioned between the bladder 14 and the unvulcanized tire 12, it does not cause air accumulation or film damage even without application of the mold release agent.

Then, the unvulcanized tire 12 is vulcanized and molded as pressed against the molds by the bladder 14 and heated by the steam supplied to the bladder 14, thereby a vulcanized tire 17 is produced (see FIG. 2(d)).

**Examples**

Although the present invention will be described in more detail using examples below, the present invention is not limited to them.

(Synthesis of the modified ethylene-vinyl alcohol copolymer)

The ethylene-vinyl alcohol copolymer 2 parts by mass (MFR: 5.5 g/10 min at 190 degrees Celsius under the load of 2160 gethylene content 44 mol %, saponification degree 99.9%) and N-methyl-2-pyrrolidone 8 parts by mass were fed to a pressurized reaction vessel, which was then heated and stirred at 120 degrees Celsius for 2 hours, in order to completely dissolve the ethylene-vinyl alcohol copolymer. As an epoxy compound, epoxy propane 0.4 parts by mass was added thereto and then heated at 160 degrees Celsius for 4 hours. After heating, deposited in distilled water 100 parts by mass, and N-methyl-2-pyrrolidone and unreacted epoxy propane were washed in a large amount of the distilled water, thereby the modified ethylene-vinyl alcohol copolymer was obtained. Moreover, the modified ethylene-vinyl alcohol copolymer obtained was crushed into particles of 2mm in diameter by a crusher and once again thoroughly washed in a large amount of the distilled water. The washed particles were vacuum-dried at room temperature for 8 hours and then melt by a twin screw extruder at 200 degrees Celsius, so as to form pellets. As a result of measurement of the following method, Young's modulus of the modified ethylene-vinyl alcohol copolymer obtained at 23 degrees Celsius was 1300 MPa.

(Method to measure Young's modulus)

A single-layer film of 20 $\mu$m in thickness was formed by the twin screw extruder manufactured by TOYO SEIKI CO., Ltd. under an extrusion condition below. Next, a strip specimen of 15 mm in width was made from the film and let stand in a temperature-controlled room at 23 degrees Celsius and 50 %RH for a week. Then, an S-S curve (strain-stress curve) at 23 degrees Celsius and 50 %RH was measured with an autograph (AG-A500 type) manufactured by Shimazu Corporation under a condition of chuck intervals 500mm and a tensile rate 50 mm/min. Then, Young's modulus was obtained from an initial slope of the S-S curve.

Screw: 20 mm$\phi$, full flight

Cylinder and setting of die temperature: C1/C2/C3/die=200/200/200/200 degrees Celsius

(Production of resin composition)

The modified ethylene-vinyl alcohol copolymer 80 part by mass and the viscoelastic body (maleic anhydride-modified SEBS) 20 parts by mass were kneaded by the twin screw extruder, thereby the resin composition was obtained.

(Example 1) [not according to the invention]

A three-layered film 1 (thermoplastic polyurethane layer/resin composition layer/thermoplastic polyurethane layer) was produced from the above resin composition and thermoplastic polyurethane (TPU) ("Kuramiron 3190" produced by Kuraray, Co., Ltd.), with a two-type three-layer co-extruder, under a co-extrusion condition below. A thickness of each layer is shown in Table 1.

An extrusion condition of each resin is as follows:

Temperature of extrusion of each resin: C1/C2/C3/die=170/170/200/200 degrees Celsius Specification of extruder for each resin:

Thermoplastic polyurethane: 25 mm$\phi$ extruder P25-18AC (manufactured by Osaka Seiki Kosaku K.K.)
Resin Composition: 20 mm$\phi$ extruder, a laboratory machine ME type CO-EXT (manufactured by TOYO SEIKI Co., Ltd)

Specification of T-die:500 mm in width, for two-type three-layer (manufactured by PLABOR Research Laboratory of Plastics Technology Co., Ltd)
Temperature of a cooling roll: 50 degrees Celsius
Winding speed: 4m/min

Next, using an electron beam irradiator "Curetoron for production EBC200-100" manufactured by NHV Corporation, the above film 1 was irradiated with the electron beam 200 kGy for crosslinking treatment, thereby the inner liner was obtained. Then, an oxygen permeability coefficient of the inner liner (film) obtained and the gelation rate of a TPU layer (innermost layer) on the inner side of the tire were measured by methods below. Results are shown in Table 1.

Using the inner liner obtained, the pneumatic tire for a vehicle having a size of 195/65R15 and a construction as shown in FIG. 1 was manufactured using a bladder without application of the mold release agent to the inner face of the tire. Then, a film appearance after vulcanization of the tire, the retention of the inner pressure of the tire and existence of cracks on the inner liner after a running test were evaluated by methods below. Results are shown in Table 1.

(Method to measure oxygen permeability)

Humidity of the above film was controlled at 20degrees Celsius and 65% RH for 5 days. The oxygen permeability of two moisture-controlled films obtained was measured with MOCON OX-TRAN 2/20 Type (registered trademark) manufactured by MOCON, Inc. under the condition at 20 degrees Celsius and 65% RH, in conformity with JIS K7126 (isopiestic method) and then an average value thereof was calculated.

(Measurement of gelation rate)

A simple substance film of the innermost layer 0.1g was dissolved in a good solvent for 2 days and then filtered, in order to measure a dry weight of residue. Then, a ratio (A/B) of the dry weight (A) of the residue and a weight (B) of the film layer was calculated to obtain the gelation rate. As the good solvent, dimethylformamide (DMF, SP value difference 4 or less) was used for thermoplastic polyurethane, whereas high temperature toluene (100 degrees Celsius, the SP value difference 4 or less) was used for styrene -ethylene/butylene-olefin crystal block copolymer (SEBC), polypropylene (PP) and polyethylene (PE), and tetrahydrofuran (THF, SP value difference 4 or less) was used for styrene-ethylene-butylene-styrene copolymer (SEBS). The residue was vacuum-dried at 70 degrees Celsius for 48 hours or longer.

(Evaluation of film appearance)

After vulcanizing and molding the pneumatic tire by use of the bladder, an appearance of the inner liner was visually observed to evaluate a condition, such as damage and the like on the film layer.

(Method to evaluate retention of inner pressure)

In an atmosphere at -30 degrees Celsius and an air pressure 140 kPa, a manufactured tire was pressed against a dram rotating at a speed equivalent to 80 km/h under a load of 6 kN to run for 10,000 km. Next, the inner pressures of this tire (test tire) and a brand new tire were adjusted to 240 kPa after mounted on rims of 6JJx15, and both of the tires were let stand for 3 months. The inner pressures of the tires were measured after 3 months,_Using the following

formula:

$$\text{Retention of inner pressure} = ((240-b)/(240-a)) \times 100$$

in order to evaluate the retention of the inner pressure (Note: in the above formula, a  denotes the inner pressure of the test tire after 3 months, whereas b denotes the inner pressure of an unused tire described in Comparative Example 1 below (pneumatic tire using usual rubber inner liner) after 3 months). With the value of the comparative example 1 as 100, other values were indexed. A larger value indicates better retention of the inner pressure.

(Method to evaluate existence of cracks)

The appearance of the inner liner after running of the tire on the drum was visually observed to evaluate whether there was cracks on the inner liner.

(Example 2)

The inner liner and the pneumatic tire were manufactured in the same manner as Example 1, except for using a film 2, in which trimethylolpropane trimethacrylate (TMPTMA) 2 mass % manufactured by DAICEL-CYTEC Company LTD, was added as a crosslinker A only to the TPU layer on the inner side of the tire. Then, an oxygen permeability coefficient of the film, the gelation rate of the TPU layer on the inner side of the tire, the film appearance after vulcanization of the tire, the retention of the inner pressure of the tire, and existence of cracks on the inner liner after the running test were measured and evaluated in the same manner as Example 1. Results are shown in Table 1.

(Example 3)

The inner liner and the pneumatic tire were manufactured in the same manner as Example 2, except for using a film 3, in which a crosslinker B (TAIC) 2 mass %, in place of the crosslinker A, was added to the TPU layer on the inner side of the tire. Then, the oxygen permeability coefficient of the film, the gelation rate of the TPU layer on the inner side of the tire, the film appearance after vulcanization of the tire, the retention of the inner pressure of the tire, and existence of cracks on the inner liner after the running test were measured and evaluated in the same manner as Example 1. Results are shown in Table 1.

(Example 4)

The inner liner and the pneumatic tire were manufactured in the same manner as Example 2, except for using a film 4, in which the crosslinker A was added 1% to the  TPU layer. Then, the oxygen permeability coefficient of the film, the gelation rate of the TPU layer on the inner side of the tire, the film appearance after vulcanization of the tire, the retention of the inner pressure of the tire, and existence of cracks on the inner liner after the running test were measured and evaluated in the same manner as Example 1. Results are shown in Table 2.

(Example 5)

The inner liner and the pneumatic tire were manufactured in the same manner as Example 2, except for using a film 5, which was irradiated with the electron beam 300 kGy. Then, the oxygen permeability coefficient of the film, the gelation rate of the TPU layer on the inner side of the tire, the film appearance after vulcanization of the tire, the retention of the inner pressure of the tire, and existence of cracks on the inner liner after the running test were measured and evaluated in the same manner as Example 1. Results are shown in Table 2.

(Example 6)

The inner liner and the pneumatic tire were manufactured in the same manner as Example 2, except for using a film 6, in which TAFMER MP0620 manufactured by Mitsui Chemicals, Inc. was used as modified polyolefin in place of TPU. Then, the oxygen permeability coefficient of the film, the gelation rate of the modified polyolefin layer on the inner side of the tire, the film appearance after vulcanization of the tire, the retention of the inner pressure of the tire, and existence of cracks on the inner liner after the running test were measured and evaluated in the same manner as Example 1. Results are shown in Table 2.

(Example 7)

The inner liner and the pneumatic tire were manufactured in the same manner as Example 2, except for using a film 7, in which PP manufactured by Sanyo Chemical Industries, Ltd. was used as modified polypropylene (modified PP) in place of TPU. Then, the oxygen permeability coefficient of the film, the gelation rate of the modified PP layer on the inner side of the tire, the film appearance after vulcanization of the tire, the retention of the inner pressure of the tire, and existence of cracks on the inner liner after the running test were measured and evaluated in the same manner as Example 1. Results are shown in Table 2.

(Example 8)

The inner liner and the pneumatic tire were manufactured in the same manner as Example 2, except for using a film 8, in which Dynaron 8630 manufactured by JSR Corporation was used as modified styrene-ethylene-butylene-styrene copolymer (modified SEBS) in place of TPU. Then, the oxygen permeability coefficient of the film, the gelation rate of the modified SEBS layer on the inner side of the tire, the film appearance after vulcanization of the tire, the retention of the inner pressure of the tire, and existence of cracks on the inner liner after the running test were measured and evaluated in the same manner as Example 1. Results are shown in Table 2.

(Example 9)

The inner liner and the pneumatic tire were manufactured in the same manner as Example 2, except for using a film 9, in which Dynaron 4630P manufactured by JSR Corporation was used as modified styrene-ethylene-butylene-olefin crystal block copolymer (modified SEBC) in place of TPU. Then, the oxygen permeability coefficient of the film, the gelation rate of the modified SEBC layer on the inner side of the tire, the film appearance after vulcanization of the tire, the retention of the inner pressure of the tire, and existence of cracks on the inner liner after the running test were measured and evaluated in the same manner as Example 1. Results are shown in Table 2.

(Example 10)

The inner liner and the pneumatic tire were manufactured in the same manner as Example 2, except for using a film 10, in which Taftec M1943 manufactured by Asahi Kasei Corporation was used as maleic anhydride-modified styrene-ethylene-butylene-styrene copolymer (maleic anhydride modified SEBS) in place of TPU. Then, the oxygen permeability coefficient of the film, the gelation rate of the maleic anhydride-modified SEBS layer on the inner side of the tire, the film appearance after vulcanization of the tire, the retention of the inner pressure of the tire, and existence of cracks on the inner liner after the running test were measured and evaluated in the same manner as Example 1. Results are shown in Table 3.

(Example 11)

The inner liner and the pneumatic tire were manufactured in the same manner as Example 2, except for using a film 13, in which epoxy modified SBS (CT310) manufactured by Daicel Chemical Industries, Ltd. was used in place of TPU. Then, the oxygen permeability coefficient of the film, the gelation rate of the epoxy modified SBS layer on the inner side of the tire, the film appearance after vulcanization of the tire, the retention of the inner pressure of the tire, and existence of cracks on the inner liner after the running test were measured and evaluated in the same manner as Example 1. Results are shown in Table 3.

(Example 12)

The inner liner and the pneumatic tire were manufactured in the same manner as Example 2, except for using a film 14, in which modified PE was used in place of TPU and a crosslinker C (silane crosslinker, Linklon (registered trademark)) 10%, in place of the crosslinker A, was added to a modified PE layer, and which is not irradiated with the electron beam after crosslinking reaction by immersion of the film in heated water. Then, the oxygen permeability coefficient of the film, the gelation rate of the modified PE layer on the inner side of the tire, the film appearance after vulcanization of the tire, the retention of the inner pressure of the tire, and existence of cracks on the inner liner after the running test were measured and evaluated in the same manner as Example 1. Results are shown in Table 3.

(Example 13) [not according to the invention]

The inner liner and the pneumatic tire was manufactured by irradiating a film 15, composed of monolayer resin composition described above, with the electron beam 200 kGy. Then, the oxygen permeability coefficient of the film, the gelation rate of the layer on the inner side of the tire, the film appearance after vulcanization of the tire, the retention of the inner pressure of the tire, and existence of cracks on the inner liner after the running test were measured and evaluated in the same manner as Example 1. Results are shown in Table 3.

(Example 14)

The film 2 irradiated with the electron beam 200 kGy and the film 2 without irradiated with the electron beam were laminated one another by heated rolls. Then, the pneumatic tire was manufactured by positioning the film 2 irradiated with the electron beam (gelation rate 35.0%) on a bladder side, that is, by arranging the film 2 as the innermost layer. Then, the oxygen permeability coefficient of the film, the gelation rate of the layer on the inner side of the tire, the film appearance after vulcanization of the tire, the retention of the inner pressure of the tire, and existence of cracks after the running test on the inner liner were measured and evaluated in the same manner as Example 1, Results are shown in Table 3.

(Comparative Example 1)

The inner liner and the pneumatic tire were manufactured in the same manner as Example 1, except for using a film 11 irradiated with the electron beam 10 kGy. Then, the oxygen permeability coefficient of the film, the gelation rate of the TPU layer on the inner side of the tire, the film appearance after vulcanization of the tire, the retention of the inner pressure of the tire, and existence of cracks on the inner liner after the running test were measured and evaluated in the same manner as Example 1. Results are shown in Table 1.

(Comparative Example 2)

The inner liner and the pneumatic tire were manufactured in the same manner as Comparative Example 1, except for using a film 12 irradiated with the electron beam 700 kGy. Then, the oxygen permeability coefficient of the film, the gelation rate of the TPU layer on the inner side of the tire, the film appearance after vulcanization of the tire, the retention of the inner pressure of the tire, and existence of cracks on the inner liner after the running test were measured and evaluated in the same manner as Example 1. Results are shown in Table 1.

(Comparative Example 3)

The inner liner and the pneumatic tire were manufactured in the same manner as Example 14, except for positioning the film 2, which is not irradiated with the electron beam (gelation rate 9.0%), on the bladder side, that is, by arranging the film 2 as the innermost layer. Then, the oxygen permeability coefficient of the film, the gelation rate of the TPU layer on the inner side of the tire, the film appearance after vulcanization of the tire, the retention of the inner pressure of the tire, and existence of cracks on the inner liner after the running test were measured and evaluated in the same manner as Example 1. Results are shown in Table 3.

[Table 1]

| | Comparative Example 1 | Comparative Example 2 | Example 1 | Example 2 | Example 3 |
|---|---|---|---|---|---|
| Film | Film 11 | Film 12 | Film 1 | Film 2 | Film 3 |
| Filem structure [μm] | 20/20/20 | 20/20/20 | 20/20/20 | 20/20/20 | 20/20/20 |
| Thickness of Innermost Layer [μm] | 20 | 20 | 20 | 20 | 20 |
| Gelation Rate of Innermost Layer [%] | 5.0 | 99.5 | 20.0 | 35.0 | 30.0 |

(continued)

| | Comparative Example 1 | Comparative Example 2 | Example 1 | Example 2 | Example 3 |
|---|---|---|---|---|---|
| Dose of Electron Beam [kGy] | 10 | 700 | 200 | 200 | 200 |
| Oxygen Permeability Coefficient [$cm^3 \cdot$ cm/$cm^2 \cdot$ sec $\cdot$ cmHg] | $9.3 \times 10^{-13}$ | $9.3 \times 10^{-13}$ | $9.3 \times 10^{-13}$ | $9.3 \times 10^{-13}$ | $9.3 \times 10^{-13}$ |
| Crosslinker | Unused | Unused | Unused | A | B |
| Additive Amount of Crosslinker [mass %] | 0 | 0 | 0 | 2 | 2 |
| Rubbery Elastic Layer | None | None | None | None | None |
| Film Appearance after Vulcanization | Deformed | Undeformed | Undeformed | Undeformed | Undeformed |
| Retention of Inner Pressure | 100 | 99 | 440 | 439 | 440 |
| Existence of Crack | Yes | Yes | No | No | No |

[Table 2]

| | Example 4 | Example 5 | Example 6 | Example 7 | Example 8 | Example 9 |
|---|---|---|---|---|---|---|
| Film | Film 4 | Film 5 | Film 6 | Film 7 | Film 8 | Film 9 |
| Filem structure [$\mu$m] | 20/20/20 | 20/20/20 | 20/20/20 | 20/20/20 | 20/20/20 | 20/20/20 |
| Thickness of Innermost Layer [$\mu$m] | 20 | 20 | 20 | 20 | 20 | 20 |
| Gelation Rate of Innermost Layer [%] | 30.0 | 40.0 | 29.0 | 28.0 | 38.0 | 40.0 |
| Dose of Electron Beam [kGy] | 200 | 300 | 200 | 200 | 200 | 200 |
| Oxygen Permeability Coefficient [$cm^3 \cdot$ cm/$cm^2 \cdot$ sec $\cdot$ cmHg] | $9.3 \times 10^{-13}$ | $9.3 \times 10^{-13}$ | $9.3 \times 10^{-13}$ | $9.3 \times 10^{-13}$ | $9.3 \times 10^{-13}$ | $9.3 \times 10^{-13}$ |
| Crosslinker | A | A | A | A | A | A |
| Additive Amount of Crosslinker [mass %] | 1 | 2 | 2 | 2 | 2 | 2 |

14

(continued)

|  | Example 4 | Example 5 | Example 6 | Example 7 | Example 8 | Example 9 |
|---|---|---|---|---|---|---|
| Film Appearance after Vulcanization | Undeformed | Undeformed | Undeformed | Undeformed | Undeformed | Undeformed |
| Retention of Inner Pressure | 439 | 438 | 439 | 440 | 439 | 440 |
| Existence of Crack | No | No | No | No | No | No |

[Table 3]

|  | Example 10 | Example 11 | Example 12 | Example 13 | Example 14 | Comparative Example 3 |
|---|---|---|---|---|---|---|
| Film | Film 10 | Film 13 | Film 14 | Film 15 | Film 2 / Film 2 | Film 2 / Film 2 |
| Filem structure [$\mu$m] | 20/20/20 | 20/20/20 | 20/20/20 | 20 | 20/20/20 20/20/20 | 20/20/20 20/20/20 |
| Thickness of Innermost Layer [$\mu$m] | 20 | 20 | 20 | 20 | 20 | 20 |
| Gelation Rate of Innermost Layer [%] | 37.0 | 40.0 | 60.0 | 50.0 | 35.0 | 9.0 |
| Dose of Electron Beam [kGy] | 200 | 200 | None | 200 | 200 | None |
| Oxygen Permeability Coefficient [$cm^3 \cdot cm/cm^2 \cdot sec \cdot cmHg$] | $9.3 \times 10^{-11}$ | $9.3 \times 10^{-13}$ | $9.3 \times 10^{-13}$ | $9.3 \times 10^{-13}$ | $9.3 \times 10^{-13}$ | $9.3 \times 10^{-13}$ |
| Crosslinker | A | A | C | None | A | A |
| Additive Amount of Crosslinker [mass %] | 2 | 2 | 10 | 0 | 2 | 2 |
| Film Appearance after Vulcanization | Uniformed | Undeformed | Undeformed | Undeformed | Undeformed | Deformed |
| Retention of Inner Pressure | 438 | 441 | 440 | 439 | 438 | 90 |
| Existence of Crack | No | No | No | No | No | Yes |

(Example 15) (not according to the invention)

The inner liner and the pneumatic tire were manufactured in the same manner as Example 1, except for using a film 16 irradiated with the electron beam 20 kGy.

Then, the oxygen permeability coefficient of the film, the gelation rate of the TPU layer on the inner side of the tire, the film appearance after vulcanization of the tire, the retention of the inner pressure of the tire, and existence of cracks on the inner liner after the running test were measured and evaluated in the same manner as Example 1. Results are shown in Table 4.

(Example 16)

The inner liner and the pneumatic tire were manufactured in the same manner as Example 12, except for using a film 17 irradiated with the electron beam 500 kGy without being immersed in the heated water. Then, the oxygen permeability coefficient of the film, the gelation rate of the modified PE layer on the inner side of the tire, the film appearance after vulcanization of the tire, the retention of the inner pressure of the tire, and existence of cracks on the inner liner after the running test were measured and evaluated in the same manner as Example 1. Results are shown in Table 4.

(Example 17)

The inner liner and the pneumatic tire were manufactured in the same manner as Example 1, except for using a film 18, in which the crosslinker A was added 4 mass% only to the TPU layer on the inner side of the tire, and which was irradiated with the electron beam 500 kGy. Then, the oxygen permeability coefficient of the film, the gelation rate of the TPU layer on the inner side of the tire, the film appearance after vulcanization of the tire, the retention of the inner pressure of the tire, and existence of cracks on the inner liner after the running test were measured and evaluated in the same manner as Example 1. Results are shown in Table 4.

(Example 18)

The inner liner and the pneumatic tire were manufactured in the same manner as Example 1, except for using a film 19, in which the crosslinker A was added 20 mass% only to the TPU layer on the inner side of the tire. Then, the oxygen permeability coefficient of the film, the gelation rate of the TPU layer on the inner side of the tire, the film appearance after vulcanization of the tire, the retention of the inner pressure of the tire, and existence of cracks on the inner liner after the running test were measured and evaluated in the same manner as Example 1. Results are shown in Table 5.

(Example 19)

The inner liner and the pneumatic tire were manufactured in the same manner as Example 1, except for using a film 20, in which the crosslinker A was added 2 mass% only to the TPU layer on the inner side of the tire, and which was irradiated with the electron beam 600 kGy. Then, the oxygen permeability coefficient of the film, the gelation rate of the TPU layer on the inner side of the tire, the film appearance after vulcanization of the tire, the retention of the inner pressure of the tire, and existence of cracks on the inner liner after the running test were measured and evaluated in the same manner as Example 1. Results are shown in Table 5.

(Example 20)

The inner liner and the pneumatic tire were manufactured in the same manner as Example 1, except for using a film 21, in which the crosslinker A was added 2 mass% only to the TPU layer on the inner side of the tire, and which was irradiated with the electron beam 5 kGy. Then, the oxygen permeability coefficient of the film, the gelation rate of the TPU layer on the inner side of the tire, the film appearance after vulcanization of the tire, the retention of the inner pressure of the tire, and existence of cracks on the inner liner after the running test were measured and evaluated in the same manner as Example 1. Results are shown in Table 5.

(Example 21)

The inner liner and the pneumatic tire were manufactured in the same manner as Example 2, except for using a film 22, in which a crosslinker D (DEGDA), in place of the crosslinker A, was added 2 mass% to the TPU layer on the inner side of the tire. Then, the oxygen permeability coefficient of the film, the gelation rate of the TPU layer on the inner side of the tire, the film appearance after vulcanization of the tire, the retention of the inner pressure of the tire, and existence of cracks on the inner liner after the running test were measured and evaluated in the same manner as Example 1. Results are shown in Table 5.

(Example 22)

The inner liner and the pneumatic tire were manufactured in the same manner as Example 2, except for using a film 23, in which a crosslinker E (NPGDA), in place of the crosslinker. A, was added 2 mass% to the TPU layer on the inner side of the tire. Then, the oxygen permeability coefficient of the film, the gelation rate of the TPU layer  on the inner side of the tire, the film appearance after vulcanization of the tire, the retention of the inner pressure of the tire, and existence of cracks on the inner liner after the running test were measured and evaluated in the same manner as Example 1. Results are shown in Table 5.

[Table 4]

|  | Example 15 | Example 16 | Example 17 |
|---|---|---|---|
| Film | Film 16 | Film 17 | Film 18 |
| Filem structure [$\mu$m] | 20/20/20 | 20/20/20 | 20/20/20 |
| Thickness of Innermost Layer [$\mu$m] | 20 | 20 | 20 |
| Gelation Rate of Innermost Layer [%] | 12.0 | 96.0 | 96.0 |
| Dose of Electron Beam [kGy] | 20 | 500 | 500 |
| Oxygen Permeability Coefficient [cm$^3 \cdot$ cm/cm$^2 \cdot$ sec $\cdot$ cmHg] | 9.3x10$^{-13}$ | 9.3x10$^{-13}$ | 9.3x10$^{-13}$ |
| Crosslinker | None | C | A |
| Additive Amount of Crosslinker [mass %] | 0 | 10 | 4 |
| Film Appearance after Vulcanization | Undeformed | Undeformed | Undeformed |
| Retention of Inner Pressure | 420 | 401 | 402 |
| Existence of Crack | No | No | No |

[Table 5]

|  | Example 18 | Example 19 | Example 20 | Example 21 | Example 22 |
|---|---|---|---|---|---|
| Film | Film 19 | Film 20 | Film 21 | Film 22 | Film 23 |
| Filem structure [$\mu$m] | 20/20/20 | 20/20/20 | 20/20/20 | 20/20/20 | 20/20/20 |
| Thickness of Innermost Layer [$\mu$m] | 20 | 20 | 20 | 20 | 20 |
| Gelation Rate of Innermost Layer [%] | 70.0 | 97.0 | 12.0 | 25.0 | 25.0 |
| Dose of Electron Beam [kGy] | 200 | 600 | 5 | 200 | 200 |
| Oxygen Permeability Coefficient [cm$^3 \cdot$ cm/cm$^2 \cdot$ sec $\cdot$ cmHg] | 9.3x10$^{-13}$ | 9.3x10$^{-13}$ | 9.3x10$^{-13}$ | 9.3x10$^{-13}$ | 9.3x10$^{-13}$ |
| Crosslinker | A | A | A | D | E |
| Additive Amount of Crosslinker [mass %] | 20 | 2 | 2 | 2 | 2 |
| Film Appearance after Vulcanization | Undeformed | Undeformed | Undeformed | Undeformed | Undeformed |
| Retention of Inner Pressure | 400 | 390 | 419 | 415 | 414 |
| Existence of Crack | No | No | No | No | No |

REFERENCE SIGNS LIST

1    tread

2    bead

3    side wall

4    carcass

5    belt

6    inner liner

11   upper mold

12   unvulcanized tire

13   lower mold

14   bladder

15   cylinder

16   rod

17   vulcanized tire

**Claims**

1. A pneumatic tire having an inner liner (6) including one or more film layers on an inner face of the pneumatic tire, wherein a gelation rate of an innermost layer of the one or more film layers on an innermost side of the pneumatic tire is 10.0-99.0% before vulcanization, wherein at least the innermost layer of the one or more film layers includes a crosslinker *and* is irradiated with electron beam, wherein the one or more film layers includes a layer composed of modified ethylene-vinyl alcohol copolymer.

2. The pneumatic tire according to claim 1, wherein the crosslinker is at least one compound selected from a group composed of silane compounds, multi-acrylate compounds and multi-methacrylate compounds.

3. The pneumatic tire according to claims 1 or 2, wherein the one or more film layers is formed of a single or multiple resin film layers and the innermost layer includes urethane elastomer.

4. The pneumatic tire according to claims 1 or 2, wherein the one or more film layers is formed of a single or multiple resin film layers and the innermost layer includes olefinic elastomer.

5. The pneumatic tire according to claims 1 or 2, wherein the one or more film layers is formed of a single or multiple resin film layers and the innermost layer includes diene elastomer.

6. The pneumatic tire according to any of claims 3 to 5, wherein the innermost layer includes the crosslinker 0.1-20 mass %.

7. The pneumatic tire according to any of claims 3 to 5, wherein the innermost layer includes trimethylolpropane trimethacrylate, triallyl isocyanurate, isocyanurate trimethacrylate, diethylene glycol diacrylate, trimethylolpropane triacrylate or neopentyl glycol diacrylate, or a silane crosslinker.

8.  The pneumatic tire according to claim 6 or 7, wherein the innermost layer is  irradiated with electron beam at the irradiation dose of 5-600 kGy.

9.  The pneumatic tire according to claim 1, wherein a total thickness of the one or more film layers is 5-2000$\mu$m.


**Patentansprüche**

1.  Luftreifen mit einer Innenseele (6), die eine oder mehrere Folienschichten auf einer Innenfläche des Luftreifens umfasst, wobei eine Gelbildungsgeschwindigkeit einer innersten Schicht der einen oder mehreren Folienschichten auf einer innersten Seite des Luftreifens 10,0 bis 99,0 % vor der Vulkanisation beträgt, wobei mindestens die innerste Schicht der einen oder mehreren Folienschichten ein Vernetzungsmittel umfasst und mit einem Elektronenstrahl bestrahlt wird, wobei die eine oder mehreren Folienschichten eine Schicht umfasst, die sich aus einem modifizierten Ethylen-Vinylalkohol-Copolymer zusammensetzt.

2.  Luftreifen nach Anspruch 1, bei dem das Vernetzungsmittel mindestens eine Verbindung ist, die aus der Gruppe ausgewählt wird, die aus Silanverbindungen, Multiacrylatverbindungen und Multimethacrylatverbindungen besteht.

3.  Luftreifen nach Anspruch 1 oder 2, bei dem die eine oder mehreren Folienschichten aus einer einzelnen oder mehreren Harzfolienschichten gebildet wird und die innerste Schicht ein Urethanelastomer umfasst.

4.  Luftreifen nach Anspruch 1 oder 2, bei dem die eine oder mehreren Folienschichten aus einer einzelnen oder mehreren Harzfolienschichten gebildet wird und die innerste Schicht ein Olefinelastomer umfasst.

5.  Luftreifen nach Anspruch 1 oder 2, bei dem die eine oder mehreren Folienschichten aus einer einzelnen oder mehreren Harzfolienschichten gebildet wird und die innerste Schicht ein Dienelastomer umfasst.

6.  Luftreifen nach einem der Ansprüche 3 bis 5, bei dem die innerste Schicht 0,1 bis 20 Masse-% Vernetzungsmittel umfasst.

7.  Luftreifen nach einem der Ansprüche 3 bis 5, bei dem die innerste Schicht Trimethylolpropantrimethacrylat, Triallylisocyanurat, Isocyanurattrimethacrylat, Diethylenglykoldiacrylat, Trimethylolpropantriacrylat oder Neopentylglykoldiacrylat, oder ein Silan-Vernetzungsmittel umfasst.

8.  Luftreifen nach Anspruch 6 oder 7, bei dem die innerste Schicht mit einem Elektronenstrahl mit einer Bestrahlungsdosis von 5 bis 600 kGy bestrahlt wird.

9.  Luftreifen nach Anspruch 1, bei dem eine Gesamtdicke der einen oder mehreren Folienschichten 5 bis 2000 $\mu$m beträgt.


**Revendications**

1.  Bandage pneumatique, comportant une gomme intérieure (6) englobant une ou plusieurs couches de film sur une face interne du bandage pneumatique, un taux de gélification d'une couche interne extrême de l'une ou des plusieurs couches de film sur un côté interne extrême du bandage pneumatique étant compris entre 10,0 et 99,0% avant la vulcanisation, dans laquelle au moins la couche interne extrême de l'une ou des plusieurs couches de film englobe un agent de réticulation et est irradiée par un faisceau d'électrons, l'une ou les plusieurs couches de film englobant une couche composée d'un copolymère éthylène-alcool vinylique modifié.

2.  Bandage pneumatique selon la revendication 1, dans lequel l'agent de réticulation est au moins un composé sélectionné dans un groupe constitué de composés de silane, de composés multi-acrylate et de composés multiméthacrylate.

3.  Bandage pneumatique selon les revendications 1 ou 2, dans lequel l'une ou les plusieurs couches de film sont formées d'une seule ou de multiples couches de film de résine, la couche interne extrême englobant un élastomère d'uréthane.

**4.** Bandage pneumatique selon les revendications 1 ou 2, dans lequel l'une ou les plusieurs couches de film sont formées d'une seule ou de multiples couches de film de résine, la couche interne extrême englobant un élastomère oléfinique.

**5.** Bandage pneumatique selon les revendications 1 ou 2, dans laquelle l'une ou les plusieurs couches de film sont formées à partir d'une ou de multiples couches de film de résine, la couche interne extrême englobant un élastomère diénique.

**6.** Pneumatique selon l'une quelconque des revendications 3 à 5, dans lequel la couche interne extrême englobe 0,1 à 20% en masse de l'agent de réticulation.

**7.** Bandage pneumatique selon l'une quelconque des revendications 3 à 5, dans lequel la couche interne extrême englobe du triméthylacrcylate de triméthylpropane, de l'isocyanurate de triallyle, du triméthylarcylate d'isocyanurate, du diacrylate de diéthylèneglycol, du triacrylate de triméthylolpropane ou du diacrylate de néopentylglycol ou un agent de réticulation à base de silane.

**8.** Bandage pneumatique selon les revendications 6 ou 7, dans lequel la couche interne extrême est irradiée par un faisceau d'électrons, la dose d'irradiation étant comprise entre 5 et 600 kGy.

**9.** Bandage pneumatique selon la revendication 1, dans lequel une épaisseur totale de l'une ou des plusieurs couches de film est comprise entre 5 et 2000 $\mu$m.

# FIG. 1

INNERMOST FACE

# FIG. 2

(a)

(b)

(c)

(d)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7040702 A
- JP 7081306 A
- JP 10026407 A
- JP 6040207 A
- JP 2002052904 A
- JP 8132553 A
- JP 2008024228 A
- JP 2008179676 A